# EUROPÄISCHE PATENTSCHRIFT

(11) **EP 0 857 817 B1**
(45) Veröffentlichungstag und Bekanntmachung des Hinweises auf die Patenterteilung: **12.11.2003**
(21) Anmeldenummer: 98100255.3
(22) Anmeldetag: 09.01.1998
(51) Int. Cl.: D21F 1/32

(54) **Reinigungsvorrichtung**
Cleaning apparatus
Appareil de nettoyage

(30) Priorität: 27.01.1997 DE 19702793
(43) Veröffentlichungstag der Anmeldung: 12.08.1998
(73) Patentinhaber: Voith Paper Patent GmbH, 89522 Heidenheim (DE)
(72) Erfinder: Straub, Karlheinz, 89518 Heidenheim (DE)

(56) Entgegenhaltungen:
- EP-A- 0 731 212
- DE-A- 4 322 565

## Beschreibung

Die Erfindung betrifft eine Vorrichtung zum Reinigen eines Transportbandes, insbesondere eines Trokken- oder Naßsiebbandes oder eines Filzbandes, einer Maschine zur Herstellung einer Materialbahn, insbesondere einer Papier- oder Kartonbahn gemäß Oberbegriff des Anspruchs 1.

Eine derartige Vorrichtung ist beispielsweise der Patentanmeldung EP-A-0 731 212 zu entnehmen.

Es sind Reinigungsvorrichtungen bekannt, die eine Reinigungsdüse aufweisen, die von einer Reinigungsglocke umgeben ist. Derartige Vorrichtungen werden zur Reinigung eines Transportbandes einer Maschine zur Herstellung einer Materialbahn eingesetzt. Die Reinigungsdüse beaufschlagt das Transportband mit einem Reinigungsmedium, das die Verunreinigungen von der Transportbandoberfläche ablöst, beispielsweise Materialbahnfasern, Kleb- oder Zuschlagstoffe oder dergleichen. Die Reinigungsglocke schirmt dabei den zu reinigenden Transportbandabschnitt gegenüber der Umgebung ab. Es hat sich herausgestellt, daß das Reinigungsergebnis nicht in jedem Fall ausreichend und zufriedenstellend ist. In manchen Fällen verbleiben auf der Oberfläche des Transportbandes gelöste Schmutzpartikel und Reinigungsflüssigkeit, die von dem Transportband aus der Reinigungsglocke ausgetragen werden. Dies führt sowohl zu einer Verschmutzung der Maschine als auch zu einer unerwünschten Beeinträchtigung der Materialbahneigenschaften.

Der Erfindung liegt daher die Aufgabe zugrunde, eine Reinigungsvorrichtung der eingangs erwähnten Art zu schaffen, die diese Nachteile nicht aufweist.

Zur Lösung dieser Aufgabe wird eine Reinigungsvorrichtung vorgeschlagen, die die in Anspruch 1 genannten Merkmale aufweist. Diese zeichnet sich dadurch aus, daß in den Randbereichen der Reinigungsglocke mindestens eine Zusatzdüse angeordnet ist. Das Reinigungsmedium wird unter Überdruck in das Innere der Reinigungsglocke eingeleitet und dadurch eine Absaugung bewirkt. Die Zusatzdüse beaufschlagt das Transportband im Bereich der Reinigungsglocke mit einem Reinigungsmedium. Hierdurch wird einerseits der Austrag von auf der Transportbandoberfläche befindlichen Schmutzpartikeln, die von der Reinigungsdüse gelöst worden sind, und von von der Reinigungsdüse auf das Transportband aufgebrachter Reinigungsflüssigkeit aus der Reinigungsglocke sehr sicher verhindert. Durch die Zusatzdüse wird die Effektivität der Reinigungsvorrichtung, das heißt deren Reinigungswirkung, in einfacher Weise verbessert, so daß die Störeinflüsse während der Produktion der Materialbahn, beispielsweise eine Rückbefeuchtung der Materialbahn durch auf oder im Transportband befindlicher Reinigungsflüssigkeit, verringert sind.

Wesentliches Merkmal den Erfindung ist, daß die Zusatzdüse derart angeordnet ist, daß das aus der Zusatzdüse ausströmende Reinigungsmedium zumindest im wesentlichen tangential auf den Reinigungsbereich auftrifft und in das Innere der Reinigungsglocke gerichtet ist. Das Reinigungsmedium wird also derart auf die Transportbandoberfläche aufgebracht, daB eine der durch das ausströmende Reinigungsmedium erzeugten Kraftkomponenten parallel beziehungsweise annährend parallel zur Transportbandoberfläche verläuft. Dadurch werden Verunreinigungen, beispielsweise Partikel von der Oberfläche des Transportbandes abgeschält und können aus dem Reinigungsbereich ausgetragen werden. Hierbei wird auch die auf der Transportbandoberfläche befindliche Reinigungsflüssigkeit vom Transportband abgelöst und ausgetragen.

Eine vorteilhafte Ausführungsform der Reinigungsvorrichtung zeichnet sich durch eine Leitfläche aus, die das aus der Zusatzdüse ausströmende Reinigungsmedium von der Reinigungsoberfläche ablenkt. Die Ablenkung erfolgt -von der Reinigungsoberfläche aus gesehen- nach oben. Das Reinigungsmedium wird also von der Transportbandoberfläche weggelenkt. Dies führt zu einer hohen Austragsrate des durch das Reinigungsmedium gelösten und mitgerissenen Schmutzes sowie der auf der Transportbandoberfläche befindlichen Reinigungsflüssigkeit.

Besonders bevorzugt wird eine Ausführungsform der Reinigungsvorrichtung, bei der das Innere der Reinigungsglocke mit einem Unterdruck beaufschlagbar ist. Durch eine Besaugung des mit einer Unterdruckeinrichtung verbundenen Innenraums der Reinigungsglocke wird der Austrag der Reinigungsmedien und des darin gelösten Schmutzes sowie der abgelösten Verunreinigungen aus dem Reinigungsbereich beziehungsweise -oberfläche weiter verbessert.

Es wird auch eine vorteilhafte Ausführungsform der Reinigungsvorrichtung bevorzugt, bei der das aus der Zusatzdüse ausgeblasene beziehungsweise unter Druck ausströmende Reinigungsmedium derart auf die Reinigungsoberfläche gerichtet wird, daß im Bereich der Strömung mindestens eine örtlich begrenzte Unterdruckzone entsteht. Diese wird vorzugsweise im Bereich der Reinigungsoberfläche ausgebildet, also dort, wo die Schmutzpartikel und die Reinigungsflüssigkeit der Reinigungsdüse von der Transportbandoberfläche abgelöst werden. Dadurch wird ein erneutes Anhaften der bereits gelösten Verunreinigungen an dem Transportband sicher vermieden und deren Austrag aus dem Reinigungsbereich unterstützt beziehungsweise bewirkt.

Schließlich wird eine Ausführungsform der Reinigungsvorrichtung bevorzugt, die sich dadurch auszeichnet, daß der Innenraum der Reinigungsglocke besaugt ist, und daß das Reinigungsmedium durch die Zusatzdüse in den Innenraum der Reinigungsglocke eingesaugt wird. Durch den mit einer Unterdruckquelle verbundenen Innenraum wird sowohl der von der Reinigungsglocke eingeschlossene Transportbandabschnitt als auch die Zusatzdüse besaugt. Ein zusätzlicher Überdruckanschluß, um das Reinigungsmedium durch die Zusatzdüse in den Innenraum der Reinigungsglocke einzubringen, wird nicht benötigt, so daß der Aufbau der Reinigungsvorrichtung vereinfacht und deren Herstellungskosten verringert sind.

Die Erfindung wird im folgenden anhand der Zeichnung näher erläutert. Es zeigen:
- Figur 1: eine schematische Seitenansicht einer Ausführungsform der erfindungsgemäßen Reinigungsvorrichtung und
- Figur 2: einen stark vergrößerten Ausschnitt der Reinigungsvorrichtung gemäß Figur 1.

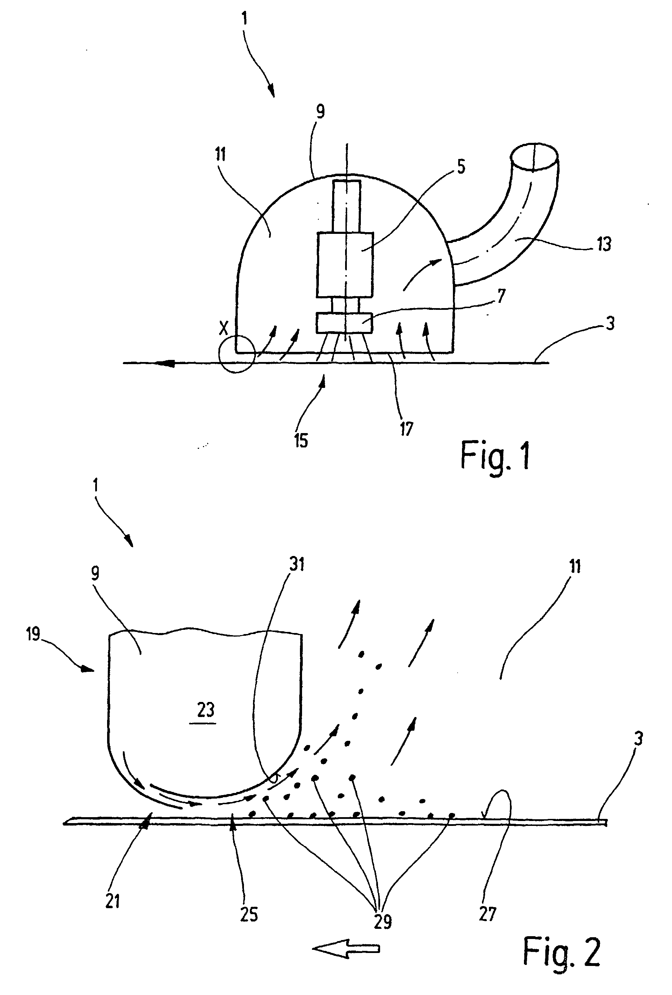

Figur 1 zeigt einen Ausschnitt aus einer hier nicht dargestellten Maschine zur Herstellung einer Materialbahn, innerhalb derer eine Vorrichtung 1 zum Reinigen eines Transportbandes 3 der Maschine angeordnet ist. Die Reinigungsvorrichtung 1 kann allgemein für beliebige Transportbänder eingesetzt werden, beispielsweise für Siebbänder beziehungsweise Filze einer Sieb- beziehungsweise einer Pressenoder Trockenpartie einer Maschine zur Herstellung einer Materialbahn, insbesondere einer Papier- oder Kartonbahn. Im folgenden wird rein beispielhaft davon ausgegangen, daß es sich hier um als Trockensiebbänder ausgebildete Transportbänder einer Papierherstellungsmaschine handelt.

Die in Figur 1 dargestellte Reinigungsvorrichtung 1 umfaßt eine als Rotordüse ausgebildete Reinigungsdüse 5, die einen rotierbaren Düsenkopf 7 mit einer nicht dargestellten Düsenanordnung aufweist. Die Düsenanordnung kann eine oder mehrere Treibdüsen, die zur Erzeugung einer Rotationsbewegung dienen, sowie eine oder mehrere der Reinigung dienenden Düsen, die das Transportband 3 mit einem Reinigungsmedium beaufschlagen, umfassen. Anstelle der Treibdüsen oder zusätzlich zu diesen kann die Rotationsbewegung der Düsenanordnung auch durch einen Elektro-, Luft- oder Hydraulikmotor erzeugt beziehungsweise unterstützt werden. Das aus der Reinigungsdüse 5 ausströmende Medium zur Reinigung des Transportsbandes 3 kann flüssig oder gasförmig, beispielsweise Dampf, sein. Im folgenden wird rein beispielhaft davon ausgegangen, daß das aus der Reinigungsdüse 5 ausströmende Medium eine Flüssigkeit ist. Die Reinigungsdüse 5 ist von einer Reinigungsglocke 9 umgeben, die mantelförmig ausgebildet ist. Der Innenraum 11 der Reinigungsglocke 9 ist über eine Anschlußleitung 13 mit einer hier nicht dargestellten Unterdruckeinrichtung verbunden. An die Reinigungsdüse 5 kann ein mit einer Hochdruckpumpe verbindbarer Hochdruckschlauch angeschlossen werden, der zur Versorgung der Reinigungsdüse 5 mit Flüssigkeit dient.

Die Reinigungsvorrichtung 1 ist an einem hier nicht dargestellten, als Bewegungseinrichtung dienenden Traversierwagen angeordnet, der quer zur Transportrichtung des Transportbandes 3 verlagerbar ist. Eine derartige Vorrichtung zum Verfahren der Reinigungsvorrichtung ist allgemein bekannt, so daß hier nicht näher darauf eingegangen wird.

Ein Endbereich 15 der Reinigungsglocke 9 ist dem in Pfeilrichtung laufenden Transportband 3 derart angepaßt, daß zwischen der Reinigungsglocke 9 und dem Transportband 3 ein variabler Abstand oder Spalt einstellbar ist, der vorzugsweise entlang eines Randes 17 des Endbereichs 15 konstant ist. Die Reinigungsdüse 5 ist in diesem Ausführungsbeispiel in der Mitte der Reinigungsglocke 9 angeordnet und wird von dieser vollständig umgeben. Die Reinigungsdüse 5 ist innerhalb der Reinigungsglocke 9 versetzbar, vorzugsweise entgegen der Transportrichtung des Transportbandes. Durch die außermittige Anordnung wird erreicht, daß der von der Reinigungsdüse 5 mit Flüssigkeit beaufschlagte Transportbandabschnitt länger besaugt werden kann beziehungsweise die Laufstrecke, bis der gereinigte Transportbandabschnitt aus dem Innenraum 11 der Reinigungsglocke 9 herausläuft, vergrößert ist.

Figur 2 zeigt eine stark vergrößerte Einzelheit des in Figur 1 mit einem "X" gekennzeichneten Bereichs der Reinigungsvorrichtung 1, nämlich einen Randbereich 19 der Reinigungsglocke 9, in dem eine Zusatzdüse 21 angeordnet ist. Die Zusatzdüse 21 ist hier in der Mantelwand 23 der Reinigungsglocke 9 im Bereich des randoffenen Endbereichs 15 der Reinigungsglocke angeordnet. Die Zusatzdüse 21 ist derart ausgerichtet, daß das ausströmende Reinigungsmedium in das Innere der Reinigungsglocke 9 gerichtet ist und tangential auf den Reinigungsbereich 25 auftrifft. Das aus der Zusatzdüse 21 ausströmende Reinigungsmedium kann gasförmig, beispielsweise Dampf oder Luft, oder flüssig sein. Die Strömung des vorzugsweise gasförmigen Reinigungsmediums ist hier mit Pfeilen angedeutet. Die Versorgung der Zusatzdüse 21 mit dem Reinigungsmedium erfolgt über nicht dargestellte Leitungen, die in der Mantelwand 23 der Reinigungsglocke 9 angeordnet sind.

Die Mantelwand 23 weist auf ihrer dem Innenraum 11 der Reinigungsglocke 9 zugewandten Seite eine Leitfläche 31 auf, die in diesem Ausführungsbeispiel der Reinigungsvorrichtung einstückig mit der Mantelwand 23 ausgebildet ist. Die Leitfläche 31 weist eine Krümmung auf, die sich von der dem Innenraum 11 zugewandten Seite der Mantelwand 23 bis unmittelbar zur Zusatzdüse 21, also bis in den Reinigungsbereich 25, erstreckt. Auf die Funktion der Leitfläche 31 wird im folgenden näher eingegangen. Das aus der Zusatzdüse 21 ausströmende Reinigungsmedium, dessen Strömung mit Pfeilen angedeutet ist, schält Verunreinigungen 29, beispielsweise Partikel/Schmutz und/oder Reinigungsflüssigkeit, von der zu reinigenden Oberfläche 27 des Transportbandes 3 ab und reißt diese mit. Dabei legt sich die Strömung des aus der Zusatzdüse 21 ausströmenden Reinigungsmediums an die Kontur der Leitfläche 31 an (Coanda-Effekt) und wird nach oben abgelenkt. Durch diese Maßnahme wird sichergestellt, daß die Verunreinigungen 29 aus dem Reinigungsbereich 25 ausgetragen und abgeführt werden. Durch das Ablösen der Verunreinigungen mittels dem aus der Zusatzdüse 21 ausströmenden Reinigungsmedium wird die Absaugwirkung der Reinigungsglocke 9 unterstützt und die Reinigungswirkung der Reinigungsvorrichtung 1 verbessert. Die Hauptreinigung des Transportbandes 3 wird von dem rotierbaren Düsenkopf 7 beziehungsweise der Reinigungsdüse 5 durchgeführt. Durch die Zusatzdüse 21 wird das Reinigungsergebnis der Reinigungsvorrichtung 1 weiter verbessert.

In einem vorteilhaften Ausführungsbeispiel der Reinigungsvorrichtung 1 ist vorgesehen, die Zusatzdüse 21 als Schlitzdüse auszubilden, die sich über einen Teilumfang oder den gesamten Randbereich der Reinigungsglocke 9 erstreckt. In einer anderen Ausführungsform der Reinigungsvorrichtung sind mehrere Zusatzdüsen vorgesehen, die in den Randbereichen der Reinigungsglocke, beispielsweise gleichmäßig über den Umfang der Reinigungsglocke verteilt, angeordnet sind.

Es kann vorgesehen sein, daß die Zusatzdüse mit unter Überdruck stehender Luft versorgt wird, so daß die Luft in die Reinigungsglocke eingeblasen werden kann. Weiterhin ist es möglich, daß die Zusatzdüse 21 von der mit einer Unterdruckquelle verbundenen Anschlußleitung 13 besaugt wird, wodurch der Aufbau der Reinigungsvorrichtung vereinfacht und deren Betriebskosten vermindert werden kann. Denkbar ist auch, daß durch die Zusatzdüse 21 eine Reinigungsflüssigkeit eingespritzt und auf den Reinigungsbereich 25 gerichtet wird. Hierdurch wird eine gute Reinigungswirkung auch bei besonders stark verunreinigten Transportbändern sichergestellt.

In einer weiteren vorteilhaften Ausführungsform der Reinigungsvorrichtung, die insbesondere zur Reinigung von grobmaschigen oder großporigen Transportbändern einsetzbar ist, ist vorgesehen, daß die Leitfläche 31 das aus der Zusatzdüse 21 ausströmende Reinigungsmedium derart umlenkt, daß es auf die Transportbandoberfläche auftrifft. Dabei werden gelöste Schmutzpartikel und Reinigungsflüssigkeit durch das Transportband hindurchgeleitet beziehungsweise -gedrückt, so daß diese auf der Rückseite des Transportbandes austreten. Dort können die Verunreinigungen mit geeigneten Mitteln aus der Maschine ausgebracht werden. Mit einer derartigen Reinigungsvorrichtung werden beide Seiten des Transportbandes in einfacher Weise effektiv gereinigt.

Die Zusatzdüse 21 wird vorzugsweise der Reinigungsdüse 5 -in Transportrichtung des Transportbandes 3 gesehen- nachgeordnet. Bei Positionierung der Zusatzdüse 21 -in Transportrichtung des Transportbandes 3 gesehen- hinter der Reinigungsdüse 5 wirkt in vorteilhafter Weise eine entgegen der Laufrichtung des Transportbandes 3 gerichtete Kraftkomponente, so daß die Reinigungswirkung besonders hoch ist.

Die Reinigungsvorrichtung 1 zeichnet sich durch einen einfachen Aufbau sowie durch eine hohe Reinigungswirkung aus. In einer vorteilhaften Ausführungsform der Reinigungsvorrichtung 1 ist vorgesehen, daß die Zusatzdüse 21 warme, vorzugsweise heiße, trockene Luft auf das Transportband 3 aufbringt, wodurch neben der Reinigung des Transportbandes und der Abfuhr der Verunreinigungen auch noch der Feuchtigkeitsgehalt des Transportbandes verringert werden kann, so daß eine Rückfeuchtung der Materialbahn praktisch ausgeschlossen werden kann.

## Patentansprüche

1. Vorrichtung zum Reinigen eines Transportbandes (3), insbesondere eines Trocken- oder Naßsiebbandes oder eines Filzbandes, einer Maschine zur Herstellung einer Materialbahn, insbesondere einer Papier- oder Kartonbahn, mit wenigstens einer gegen das Transportband (3) richtbaren Düse zum Beaufschlagen dieses Transportbandes (3) mit einem gasförmigen oder flüssigen Medium, und mit einer die Reinigungsdüse (5) mantelförmig umgebenen Reinigungsglocke (9) und mit mindestens einer in den Randbereichen (19) der Reinigungsglocke (9) angeordneten Zusatzdüse (21), wobei das Reinigungsmedium unter Überdruck in das Innere der Reinigungsglocke (9) eingeleitet und dadurch eine Absaugung bewirkt wird, **dadurch gekennzeichnet, dass** die Zusatzdüse (21) derart angeordnet ist, dass das aus der Zusatzdüse (21) ausströmende Reinigungsmedium zumindest im wesentlichen tangential auf den Reinigungsbereich (25) auftrifft und in das Innere der Reinigungsglocke (9) gerichtet ist.

2. Reinigungsvorrichtung nach Anspruch 1, **gekennzeichnet, durch** eine Leitfläche (31), die das aus der Zusatzdüse (21) ausströmende Reinigungsmedium von der Reinigungsoberfläche (27) ablenkt.

3. Reinigungsvorrichtung nach Anspruch 1 oder 2, **dadurch gekennzeichnet, dass** das Innere der Reinigungsglocke (9) mit einem Unterdruck beaufschlagbar ist.

4. Reinigungsvorrichtung nach einem der Ansprüche 1 bis 3, **dadurch gekennzeichnet, dass** der Innenraum (11) der Reinigungsglocke (9) besaugt ist, und dass das Reinigungsmedium durch die Zusatzdüse (21) in den Innenraum (11) eingesaugt wird.

5. Reinigungsvorrichtung nach einem der vorhergehenden Ansprüche, **dadurch gekennzeichnet, dass** die Zusatzdüse (5) - in Transportrichtung des Transportbandes (3) gesehen - nachgeordnet ist.

6. Reinigungsvorrichtung nach Anspruch 5, **dadurch gekennzeichnet, dass** die Zusatzdüse (21) eine entgegen der Laufrichtung des Transportbandes (3) gerichtete Kraftkomponente besitzt.

## Claims

1. Apparatus for cleaning a transport belt (3), in particular a dry or wet fabric belt or a felt belt for a machine for producing a material web, in particular a paper or board web, having at least one nozzle which can be aimed towards the transport belt (3) to act on this transport belt (3) with a gaseous or liquid medium, and having a cleaning bell (9) which surrounds the cleaning nozzle (5) in the shape of a cover, and having at least one additional nozzle (21) arranged in the edge regions (19) of the cleaning bell (9), the cleaning medium being introduced into the interior of the cleaning bell (9) under positive pressure and, as a result, extraction being effected, **characterized in that** the additional nozzle (21) is arranged in such a way that the cleaning medium flowing out of the additional nozzle (21) strikes the cleaning region (25) at least substantially tangentially and is aimed into the interior of the cleaning bell (9).

2. Cleaning apparatus according to Claim 1, **characterized by** a guide surface (31) which deflects the cleaning medium flowing out from the additional nozzle (21) away from the cleaning surface (27).

3. Cleaning apparatus according to Claim 1 or 2, **characterized in that** the interior of the cleaning bell (9) can be acted on by a vacuum.

4. Cleaning apparatus according to one of Claims 1 to 3, **characterized in that** the interior (11) of the cleaning bell (9) has vacuum applied to it, and **in that** the cleaning medium is sucked into the interior (11) through the additional nozzle (21).

5. Cleaning apparatus according to one of the preceding claims, **characterized in that** the additional nozzle (5) is arranged downstream, as viewed in the transport direction of the transport belt (3).

6. Cleaning apparatus according to Claim 5, **characterized in that** the additional nozzle (21) has a force component oriented counter to the running direction of the transport belt (3).

## Revendications

1. Appareil de nettoyage d'une bande de transport (3), en particulier d'une bande de toile sèche ou humide ou d'une bande de feutre, d'une machine pour la fabrication d'une nappe de matériau, en particulier d'une nappe de papier ou de carton, comprenant au moins une tubulure orientable vers la bande de transport (3) pour solliciter cette bande de transport (3) avec une substance gazeuse ou liquide, et comprenant une cloche de nettoyage (9) entourant sous forme d'enveloppe la tubulure de nettoyage (5), et comprenant au moins une tubulure supplémentaire (21) disposée dans les régions marginales (19) de la cloche de nettoyage (9), la substance de nettoyage étant introduite avec une surpression à l'intérieure de la cloche de nettoyage (9) et de ce fait une aspiration étant créée, **caractérisé en ce que** la tubulure supplémentaire (21) est disposée de telle sorte que la substance de nettoyage sortant de la tubulure supplémentaire (21) parvienne au moins essentiellement tangentiellement sur la région de nettoyage (25) et soit orientée vers l'intérieur de la cloche de nettoyage (9).

2. Appareil de nettoyage selon la revendication 1, **caractérisé par** une surface de guidage (31) qui dévie de la surface de nettoyage (27) la substance de nettoyage sortant de la tubulure supplémentaire (21).

3. Appareil de nettoyage selon la revendication 1 ou 2, **caractérisé en ce que** l'intérieur de la cloche de nettoyage (9) peut être sollicité avec une pression négative.

4. Appareil de nettoyage selon l'une quelconque des revendications 1 à 3, **caractérisé en ce que** l'espace interne (11) de la cloche de nettoyage (9) est soumis à une aspiration, et **en ce que** la substance de nettoyage est aspirée par la tubulure supplémentaire (21) dans l'espace interne (11).

5. Appareil de nettoyage selon l'une quelconque des revendications précédentes, **caractérisé en ce que** la tubulure supplémentaire (21), vu dans la direction de transport de la bande de transport (3), est placée après la tubulure de nettoyage (5).

6. Appareil de nettoyage selon la revendication 5, **caractérisé en ce que** la tubulure supplémentaire (21) possède une composante de force orientée à l'encontre de la direction d'avance de la bande de transport (3).
